# EUROPEAN PATENT APPLICATION

(11) **EP 2 166 759 A1**
(43) Date of publication of application: **24.03.2010**
(21) Application number: 08784079.9
(22) Date of filing: 21.08.2008
(51) Int. Cl.: H04N 7/14

(54) **A METHOD AND APPARATUS OF PLAYING DYNAMIC AUDIO-VIDEO MENU**

(30) Priority: 18.02.2008 CN 200810057831
(71) Applicant: Huawei Technologies Co., Ltd., Shenzhen, Guangdong 518129 (CN)
(72) Inventor: HUANG, Hui, Shenzhen 518129 (CN)
(74) Representative: Kreuz, Georg Maria
(86) International application number: PCT/CN2008/072088
(87) International publication number: WO 2009/103204

(57) **Abstract**

A method and an apparatus for playing dynamic audio and video menus are provided herein to play two or more audio and video menu items dynamically. Specifically, the audio and video data in at least two obtained audio and video menu items are split into audio data and video data respectively; after the splitting, the obtained video data are integrated into one video stream data; and the audio data and the integrated video stream data are played. In this way, the video data of each menu item in the dynamic audio and video menus are played smoothly, the voice prompts can be spliced seamlessly, the effect of the audio dynamic menus is the same as the effect of playing a single audio file, and the user can hear the voice menus smoothly.

## Description

### FIELD OF THE INVENTION

The present invention relates to interactive voice and video technologies, and in particular, to a method and an apparatus for playing dynamic audio and video menus.

### BACKGROUND

Interactive Voice Response (IVR) and Interactive Voice and Video Response (IVVR) are two prevalent services. The IVVR is known as video IVR or video portal. The IVVR service exchanges voice and videos between two parties based on a video conversation, and is applied in this environment: one end is a user, and the other end, such as an end office, is an application program, namely, application system.

In the IVR service, an audio dynamic menu function is applied in order to adapt to the service contents that keep updating. Each candidate audio dynamic menu item provides its voice prompt indicative of the content. When the IVR system needs to generate a menu on a certain level, the voice prompts of all required audio dynamic menu items are spliced, and additional voice prompts (auxiliary voices) are added between different voice prompts to form a complete voice prompt menu. Many automatic voice information services work in that way, for example, "10060", "95588", and "800XX...X".

For example, an automatic voice information service system includes these dynamic menu items: financial news, sports, entertainment, and politics, and so on. They have their own voice prompts, and their content corresponds to their title. The IVR system needs to organize them sequentially in the corresponding menu. The user presses 1, 2, 3, 4... to select them, and presses 0 to return to the upper-level menu. The voice prompt menus may be organized in this way: Press 1 for "financial news", press 2 for "sports", press 3 for "entertainment", press 4 for "politics",..., and press 0 to get back to the upper-level menu. The system records these voice prompts beforehand, namely, "press 1", "press 2", "press 3", "press 4", and "press 0", to get back to the upper-level menu", and they can be spliced dynamically when required, and this type of the voice is namely an auxiliary voice in the disclosure.

In the IVR service, if there is no background music or continuously consistent background music , the sound can be spliced seamlessly, and the effect of the audio dynamic menu is the same as the effect of playing a single audio file.

In the IVVR service, the audio and video dynamic menu is the same time with audio and video. If the audio and video dynamic menu is made in the way similar to making an audio dynamic menu, namely, each audio and video dynamic menu item provides an audio and video file, and the system splices the files together. As a prompt voice of an audio and video dynamic menu item includes several words, and the time of playing the audio is very short, the video and the audio shift simultaneously, and the user may feel that the screen keeps shifting and blinking. If the video and the audio do not shift simultaneously, the audio cannot reflect the current video content, and cannot fulfill the user requirements.

### SUMMARY

According to different aspects of the present invention a method and an apparatus for playing dynamic audio and video menus to generate audio and video dynamic menus dynamically are provided, to display videos smoothly, prevent frequent shifting and blinking, and make the audio reflect the video content in real time.

The method for playing dynamic audio and video menus may include:
splitting audio and video data in at least two obtained audio and video menu items into audio data and video data respectively;
integrating the obtained video data into one video stream data; and
playing the audio data and the integrated video stream data.

The apparatus for playing dynamic audio and video menus includes:
a service processing unit, adapted to split audio and video data in at least two obtained audio and video menu items into audio data and video data respectively;
a video data processing unit, adapted to integrate the video data obtained through splitting by the service processing unit into one video stream data, and play the integrated video stream data; and
an audio data processing unit, adapted to play audio data according to set rules when playing video data.

As can be seen from above, according to the present invention, the video data of each menu item in the dynamic audio and video menus is played smoothly, the voice prompts can be spliced seamlessly, the effect of the audio dynamic menus is the same as the effect of playing a single audio file, and the user can hear the voice menus smoothly.

### BRIEF DESCRIPTION OF THE DRAWINGS

FIG. 1 is a schematic diagram of an embodiment of the present invention of a playing dynamic audio and video menus method;
FIG. 2 shows a schematic diagram of an embodiment of the present invention of playing dynamic audio and video menus apparatus; and
FIG. 3 shows a schematic diagram of an embodiment of the present invention of a processing dynamic audio and video menus process.

### DETAILED DESCRIPTION

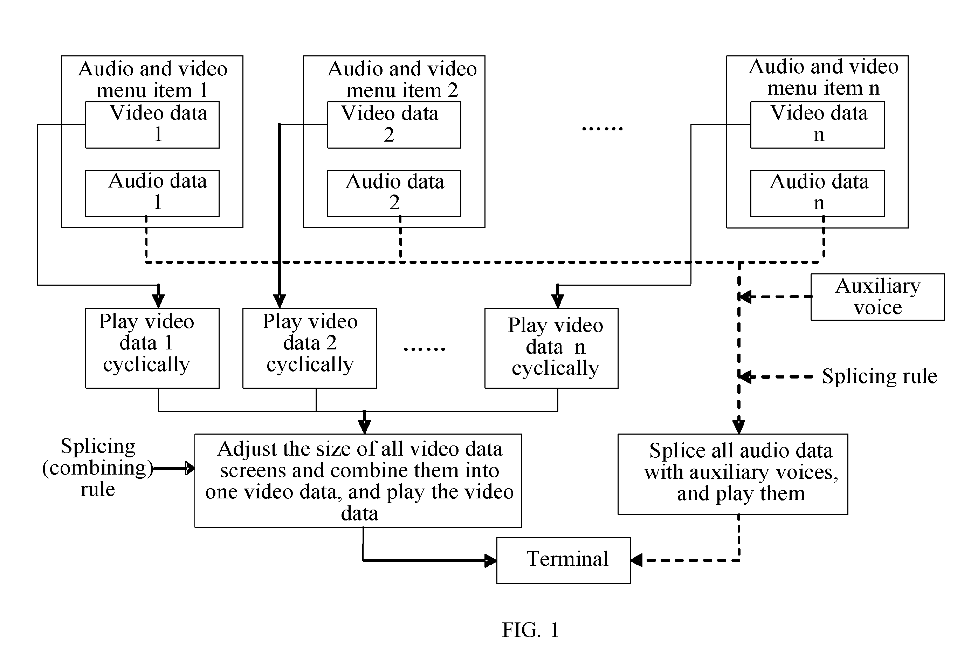

According to the embodiments of the present invention a method for playing dynamic audio and video menus is provided. The method enables dynamic playing of two or more audio and video menu items, and the specific procedure includes the following steps:
Firstly, the audio and video data in at least two obtained audio and video menu items are split into audio data and video data respectively. Specifically, the audio and video data in each of the obtained audio and video menu items is split into one channel of audio data and one channel of video data. As shown in FIG. 1, each candidate audio and video menu item includes video data, such as video prompt file, and audio data, such as audio prompt file. The corresponding audio and video menu item may be an ordinary file that includes audio and video codes, for example, an MPEG-4 file or H.264 file. After the splitting, the channel of audio data and the channel of video data may be stored onto the corresponding storage device.
Secondly, the video data obtained after splitting are integrated into one video stream data. Specifically, at least two channels of video data are obtained after the audio and video menu items are split, and are integrated into one video stream data and sent to the terminal for being played at the terminal. In this process, at least two channels of video data obtained after the splitting can be integrated into one video data, and displayed on the same terminal. As shown in FIG. 1, when the system plays dynamic audio and video menus on a certain level, an integrated video screen to be output is planned according to the number of the dynamic menu items, and the video data corresponding to each dynamic audio and video menu item is extracted. After the screen size is adjusted, the video data corresponding to at least two dynamic audio and video menu items are spliced into one video data for outputting. Therefore, the user may see the video data of all the menu items at a time. There are multiple menu items, and the screen of the video data of each menu item is complete and visible except that the video screen of each menu item is less than the integrated screen. Taking the Quarter Common Intermediate Format, QCIF, standard format as an example, if the system needs to play four dynamic menu items, the splicing mode may be: as the QCIF image format size is 176 * 144, each of the four dynamic menu items may be compressed into a size of 88 * 72 respectively. After the compression, the four dynamic menu items can be spliced into a standard QCIF image, and may be output on the terminal as a whole.

While playing the video data, the audio data may be integrated according to set rules from at least two channels of audio data and then be played, the at least two channels of audio data are obtained after the splitting. As shown in FIG. 1, the system may splice the audio data parts of all menu items with auxiliary voices to form an audio prompt data for being played consecutively. The process of making the audio prompt data is the same as the process of making the audio dynamic menu in the IVR service. Meanwhile, the at least two channels of audio data may be played cyclically according to set rules, where the at least two channels of audio data are obtained after the splitting.

In the process of playing the video data and the audio data, the system receives the input selection sent by the user through the terminal, and proceeds to the corresponding service process according to the selection of the user. For example, if the user selects a VOD program through the terminal, the system provides the corresponding program or program profile for the user. If the system receives no input selection from the user within the set time or the set number of times of playing, the system may stop playing the video data and audio data and return to the upper-level menu, or quit the system or enter the set subsequent service process. That is to say, the each menu menus video data may be played cyclically. After all audio data are played, the service logic may decide whether to start over the cyclic play.

In the process of playing the video data and audio data, the system may receive the input selection of the user, namely, receive the key pressing information of the user. The following two scenarios are possible:
If the user inputs the selection information correctly, the system stops playing audio and video and receiving digits, and enters subsequent service logics such as playing the corresponding program; or
after the audio prompt is played repeatedly for several times or for set duration, if the user inputs no selection information through the terminal or inputs the selection information incorrectly, the system stops playing audio and video to the terminal and stops receiving digits, and goes on-hook.

Adopting the way mentioned above, the video data of each menu item in the dynamic audio and video menus are played smoothly, the voice prompts can be spliced seamlessly, the effect of the audio dynamic menus is the same as the effect of playing a single audio file, and the user can hear the voice menus smoothly.

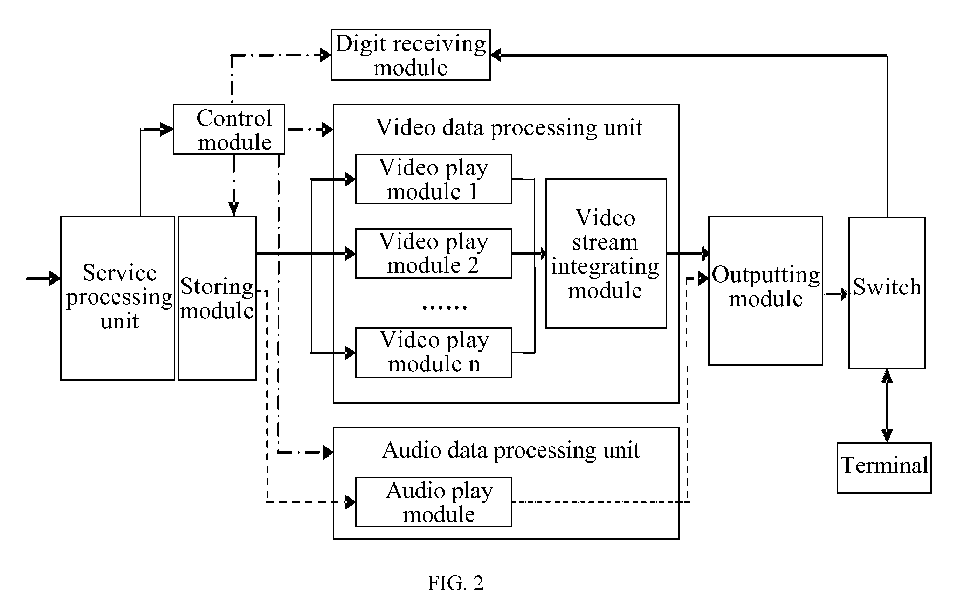

An apparatus for playing dynamic audio and video menus is provided in an embodiment of the present invention. As shown in FIG. 2, the apparatus includes a service processing unit, a video data processing unit, and an audio data processing unit.

The service processing unit splits the audio and video data in at least two obtained audio and video menu items into audio data and video data respectively. Specifically, the audio and video data in each of the candidate audio and video menu items are split into one channel of audio data and one channel of video data by means of decoding.

The video data processing unit integrates the video data obtained by the service processing unit after the splitting into one video stream data, and plays the integrated video stream data. Specifically, the video data processing unit may further include two video playing modules. Each of the video playing modules is adapted to play the corresponding channel of video data on a same display terminal. The video data processing unit further includes a video stream integrating module, which is adapted to adjust the screen size of at least two channels of video data and integrate the at least two channels of video data into one video data for playing.

The audio data processing unit, namely, audio playing module, is adapted to play the audio data according to set rules synchronously with the play of video data. The system may splice the audio data parts of all menu items with the auxiliary voices to form an audio prompt data for being played consecutively. The process of making the audio prompt data is the same as the process of making the audio dynamic menu in the IVR service. Meanwhile, the terminal may play at least two channels of audio data cyclically according to set rules, where the at least two channels of audio data are obtained after the splitting.

The service processing unit, the video data processing unit, and the audio data processing unit described above perform the corresponding functions under control of the control module. After receiving the information sent by the service processing unit, the control module controls the video data processing unit and the audio data processing unit to play the video data and audio data according to the received corresponding information.

Besides, the apparatus described above may include a storing module, which is adapted to store the candidate audio and video menu items, or store the video data and the audio data obtained after the splitting. The apparatus further includes a digit receiving module. The digit receiving module is also controlled by the control module, and is adapted to receive the input selection sent by the user through the terminal, and continue with the subsequent service process according to the input selection.

In order to make the present invention clear, the process of organizing dynamic audio and video menus when the apparatus for playing the dynamic audio and video menus under the present invention implements an IVVR service is elaborated below, with the exception handling process being ignored.

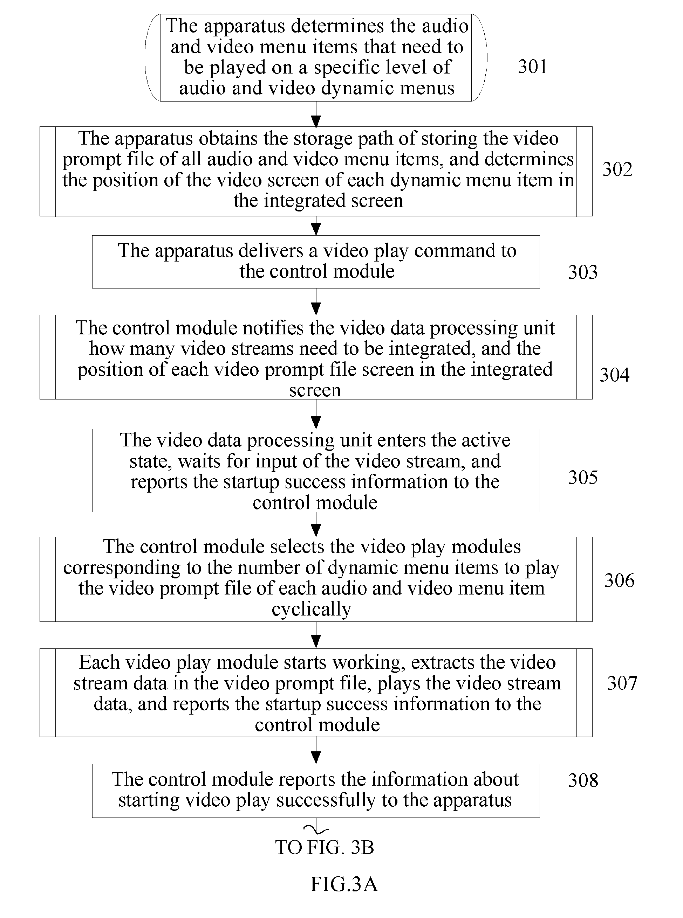

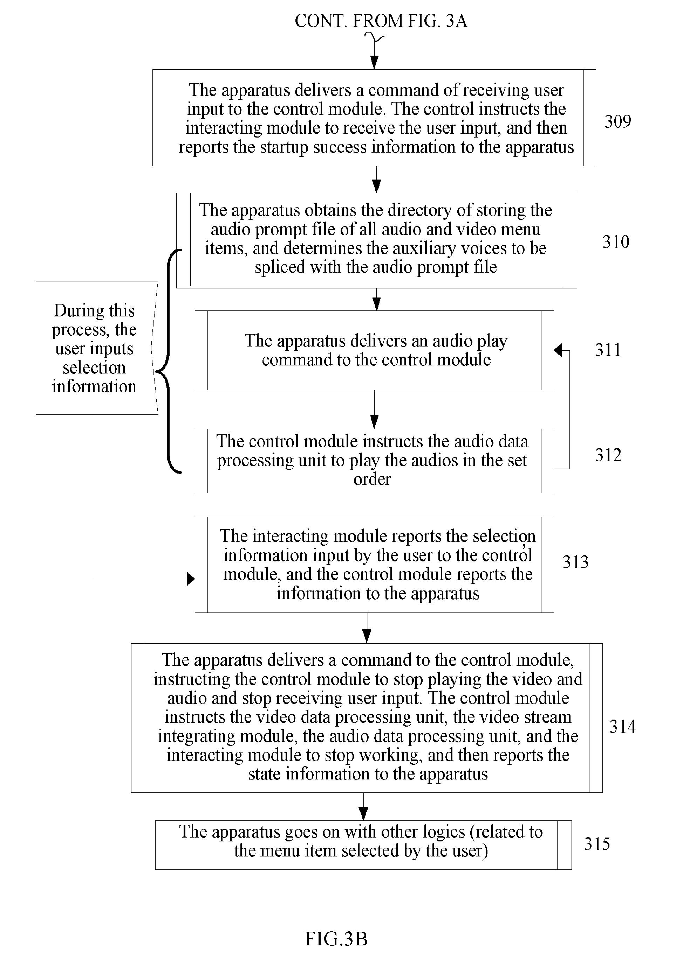

As shown in FIG. 3, the process may include the following steps:
Block 301: The apparatus for playing dynamic audio and video menus determines the audio and video menu items that need to be played on a specific level of audio and video dynamic menus.
Block 302: The apparatus obtains the storage path of storing the video prompt file (video data) of all audio and video menu items, and determines the position of the video screen of each dynamic menu item in the integrated screen.
Block 303: The apparatus delivers a video play command to the control module.
   The video play command carries a directory of storing the video prompt file of all audio and video menu items, and a position of the video screen of each audio and video menu item in the integrated screen.
Block 304: The control module notifies the video data processing unit how many video prompt files (video streams, whose quantity is the same as the number of audio and video menu items) need to be integrated, and the position of each video prompt file screen in the integrated screen.
Block 305: The video data processing unit enters an active state, waits for input of the video prompt file, and reports the startup success information to the control module.
Block 306: The control module selects the video play modules corresponding to the number of audio and video menu items to play the video prompt file of each audio and video menu item cyclically.
Block 307: Each video play module starts working, plays the video in the video prompt file, and reports the startup success information to the control module.
Block 308: The control module reports the information about starting video play successfully to the apparatus.
Block 309: The apparatus delivers a command of receiving user input (receiving digits) to the control module. The control module instructs the digit receiving module to receive the user input (receive digits), and reports the startup success information to the apparatus.
Block 310: The apparatus obtains the directory of storing the audio prompt file of all dynamic menu items, and determines the auxiliary voices to be spliced with the audio prompt file.
Block 311: The apparatus delivers an audio play command to the control module.
   The audio play command carries: a directory of storing the audio prompt file of all audio and video menu items, a directory of storing the required auxiliary voices, and order of playing all audio prompt files.
Block 312: The control module instructs the audio data processing unit to play the audios in the set order.
   Generally, all audios are played sequentially. The first audio prompt file is played first. Upon completion of the play, the audio data processing unit reports the completion state to the control module, and the control module instructs the audio data processing unit to play the next audio prompt file until all files are played. Finally, the control module reports completion of playing all files to the apparatus.
   If the cyclic play mode is applied, blocks 311 and 312 are repeated, or block 312 is repeated.
   If the selection input by the user is received in the process of implementing blocks 310-312, block 313 is performed.
Block 313: The digit receiving module reports the selection information input by the user to the control module, and the control module reports the information to the apparatus.
Block 314: The apparatus delivers a command to the control module, instructing the control module to stop playing the video and audio and stop receiving user input. The control module instructs the video data processing unit, the video stream integrating module, the audio data processing unit, and the digit receiving module to stop working, and then reports the state information to the apparatus.
Block 315: The apparatus goes on with other logics, and the other logics related to the menu item selected by the user.

It is understandable to those skilled in the art that all or part of the blocks of the foregoing embodiments may be implemented by hardware instructed by a program. The program may be stored in a computer-readable storage medium. The storage medium may be a Read-Only Memory (ROM)/Random Access Memory (RAM), magnetic disk, or Compact Disk (CD).

Although the invention has been described through some preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for playing dynamic audio and video menus, comprising:
splitting audio and video data in at least two obtained audio and video menu items into audio data and video data respectively;
integrating the split video data into one video stream data; and
playing the audio data and the integrated video stream data.

2. The method according to claim 1, wherein the audio data is played according to a set rules.

3. The method according to claim 1 or 2, further comprising:
receiving the input selection sent by the user during playing the video data and the audio data; and
proceeding to the corresponding service process according to the input selection.

4. The method according to claim 3, comprising:
if the user inputs no selection information after the audio prompt is played repeatedly for several times or for set duration, stopping playing audio and video, returning to the upper-level menu, quitting the system or entering a set subsequent service process.

5. An apparatus for playing dynamic audio and video menus, comprising:
a service processing unit, adapted to split audio and video data in at least two obtained audio and
video menu items into audio data and video data respectively;
a video data processing unit, adapted to integrate the video data obtained through splitting by the service processing unit into one video stream data, and play the integrated video stream data; and
an audio data processing unit, adapted to play audio data according to set rules when playing video data.

6. The apparatus for playing dynamic audio and video menus according to claim 5, further comprising a storing module, adapted to store the candidate audio and video menu items or the video data and the audio data obtained after the splitting.

7. The apparatus for playing dynamic audio and video menus according to claims 5 or 6,
wherein the video data processing unit further comprising:
a video playing modules, adapted to play an video data;
a video stream integrating module, adapted to adjust the screen size of at least two channels of video data and integrate the at least two channels of video data into one video data for playing.

8. The apparatus for playing dynamic audio and video menus according to claims 5 or 6, further comprising a storing module, adapted to store the candidate audio and video menu items or the video data and the audio data obtained after the splitting.

9. The apparatus for playing dynamic audio and video menus according to claims 5 or 6, further comprising a digit receiving module, adapted to receive the input selection sent by the user through the terminal, and continue with the subsequent service process according to the input selection.
